Europäisches Patentamt

European Patent Office

Office européen des brevets

(11) Publication number: 0 467 351 A2

# EUROPEAN PATENT APPLICATION

(21) Application number: 91111985.7

(51) Int. Cl.5: F16H 1/44

(22) Date of filing: 17.07.91

(30) Priority: 18.07.90 IT 2097190

(43) Date of publication of application:
22.01.92 Bulletin 92/04

(84) Designated Contracting States:
AT BE CH DE DK ES FR GB IT LI NL SE

(71) Applicant: HURTH AXLE S.p.A.
Via Linfa - Zona Industriale
I-38062 Arco (Trento)(IT)

(72) Inventor: Hurth, Fritz Carl Anton
Casa dei Fiori
CH 6926 Montagnola(CH)

(74) Representative: Modiano, Guido et al
MODIANO, JOSIF, PISANTY & STAUB
Modiano & Associati Via Meravigli, 16
I-20123 Milano(IT)

(54) Device and process for the automatic control of the locking of differential gearings.

(57) The present invention relates to a device for the automatic control of differentials, particularly for industrial machines, earth-movers and the like, which comprises processing means for evaluating a plurality of signals arriving from a plurality of sensors and selectors which can be electrically connected to the processing means. The processing means have switchable memory means and program-based driver means for actuating differential locking means.

Fig. 1

EP 0 467 351 A2

Rank Xerox (UK) Business Services

The present invention relates to a device and to a process for the automatic control of the locking of differentials, particularly for industrial machines, earth-movers and the like.

Differentials which can he locked directly by the operator or are self-locking are currently used on one or more axles in earth-movers, industrial machines, farm machines and the like.

In the case of differentials which can be locked by the operator, the locking control is usually located in the driving cabin, close to the steering wheel, and comprises a pushbutton.

The control pushbutton acts, for example, on electric actuation valves which lock the differentials.

These pushbuttons are usually of the retained or non-retained type. In the first case, the pushbutton closes a normally-open circuit until the operator releases the pushbutton itself. This type of pushbutton is extremely dangerous, since it might be activated during a very tight curve, with very high relative speeds between the axle shafts which are connected to the differential, or when a wheel slips with respect to the other one, with relative speeds which are similar to the preceding ones. In this case, permanent damage can occur to the differential and even more so to the axle shafts, up to the breakage of one or both of the axle shafts.

Furthermore, when the locking of the differential is entrusted to the intuition of the operator and is never based on quantitative elements but only on qualitative ones, this can also entail absolutely useless activations which can sometimes turn out to be even harmful.

The aim of the present invention is to eliminate or substantially reduce the disadvantages described in known types of locking systems for differentials by providing a device for the automatic control of the locking of differentials particularly for industrial machines, earth-movers and the like which eliminates the possibility of breakages in the differential or in the axle shafts.

Within the scope of the above mentioned aim, an object of the present invention is to provide a device which eliminates the need for retention pushbuttons for manual control.

Another object of the present invention is to provide a device which is strong, reliable and easy to maintain.

Not least object of the present invention is to provide a device which is relatively easy to manufacture and at very competitive costs.

This aim, the objects mentioned and others which will become apparent hereinafter are achieved by a device for the automatic control of the locking of differentials, particularly for industrial machines, earth-movers and the like, according to the invention, as defined in the accompanying claims.

Further characteristics and advantages of the invention will become apparent from the description of a preferred but not exclusive embodiment of a device and of a process for the automatic control of the locking of differentials according to the invention, illustrated only by way of non-limitative example in the accompanying drawings, wherein:

figure 1 is a block diagram of the device according to the invention;

figure 2 is a plan view of a preferred embodiment of the device according to the invention;

figure 3 is the main flowchart of a process according to the invention;

figure 4 is the flowchart of a verification phase of the process;

figure 5 is the flowchart of a read phase of the process; and

figure 6 is the flowchart of an evaluation phase of the process.

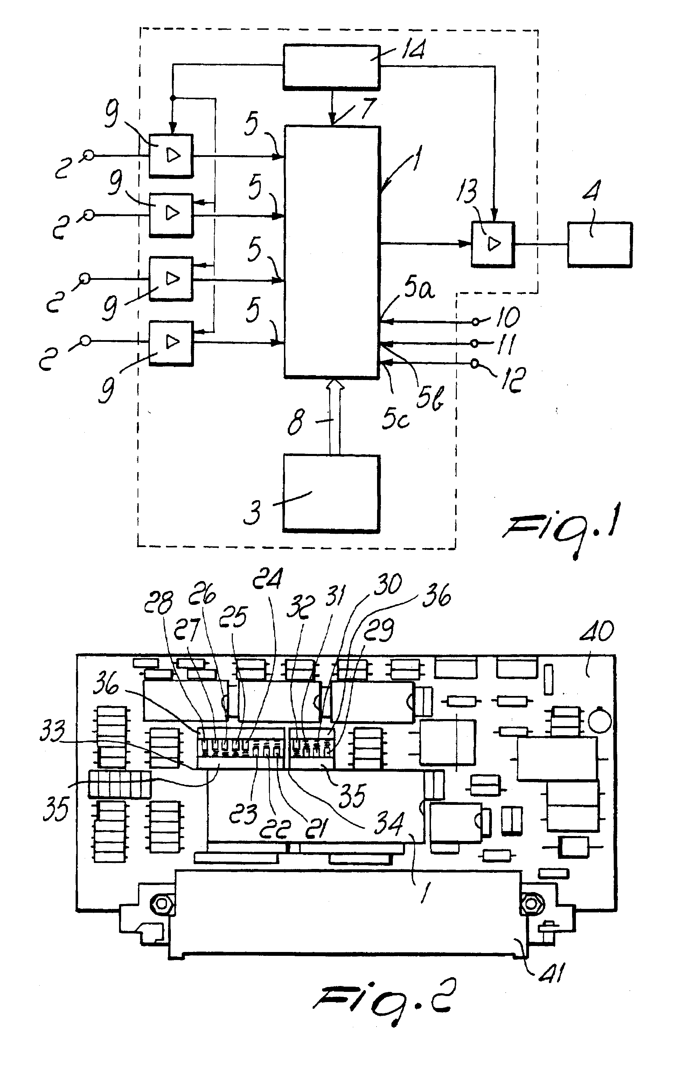

With reference to figure 1, a block diagram of the device for the automatic control of the locking of differentials comprises processing means 1 for evaluating a plurality of signals arriving from a plurality of sensors 2 which can be electrically connected to the processing means 1.

Said processing means 1 are provided with switchable memory means 3 and with program-based driver means for actuating means 4 for locking differentials.

The processing means 1 comprise a microprocessor, also indicated by the reference numeral 1, which is provided with a plurality of input terminals 5, with at least one output terminal 6, with at least one power supply terminal 7 and with a plurality of input/output terminals 8.

Signal forming means, constituted by amplifiers 9, are interposed between the sensors 2 and the terminals 5 in order to adapt the amplitude of the input signals to the level required by the microprocessor 1. A steering sensor 10, a steering selector 11 and a manual locking control 12 are respectively connected to other input terminals 5a, 5b and 5c.

Signal adapter means, constituted by a power amplifier 13, are interposed between the output terminal 6 and the differential locking means 4 constituted for example by at least one electric valve. The microprocessor 1 and the amplifiers 9 and 13 are powered by a single power supply 14.

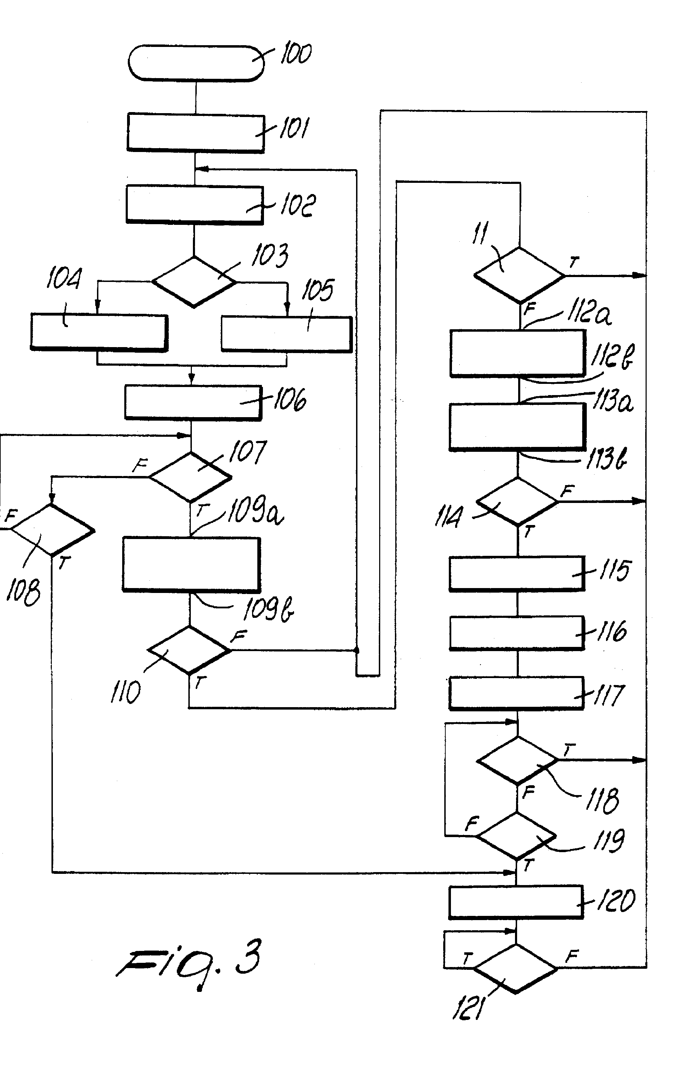

The switchable memory means 3 can be provided by means of various electronic solutions, such as for example two-position switches, or by means of two-position jumpers or by means of download memories. In particular, in the embodiment illustrated in figure 2, the switchable memory means 3 comprise a plurality of switches 21, 22, 23, 24, 25, 26, 27, 28, 29, 30, 31 and 32 which are clustered in banks 33 and 34 and can be switched either to the ON position, indicated by the reference numeral 35, or to the OFF position, indicated by the reference numeral 36. The device according to the invention, or rather the program-based driver means, are configured by means of the placement of the switches 21 to 32, as more clearly described hereinafter.

With reference to figure 3, the process for the automatic control of the locking of differentials according to the invention comprises the following phases, which are divided into the various component steps illustrated in the above mentioned figure (the indication /T or /F indicates the outputs of two-way steps):

- an initialization phase (steps 100 and 101) during which the device is reactivated by resetting all the volatile memory registers included either in the microprocessor 1 or in the device as a whole.
- a checkout phase, during which the electric valves 4 are released (step 102) and the number of measurement channels 5 to be activated (either two or four) is evaluated (step 103). In the first case (step 104), only two channels 5 are activated; otherwise (step 105) all the channels are activated;
- a measurement phase, during which the input pulses in each individual channel 5 in a preset time period equal to one second are measured, starting the time check in step 106 and checking its completion in step 107. While the logic value of the comparison performed in the step 107 is false (step 107/F), the possible activation of the manual control 12 on the channel 5c is simultaneously evaluated (step 108). If the manual control is found to be active (step 108/T), control passes to the manual locking phase; otherwise (step 108/F) control returns to step 107. After measurement has been completed (step 107/T), control passes to the verification phase;
- a verification phase, during which the values measured on each input channel 5 are compared with preset maximum and minimum values (step 109): if this verification is positive (step 110/T), control passes to the testing phase; otherwise (step 110/F) control returns to the checkout phase;
- a testing phase (step 111), during which the value of an input channel 5a, to which a steering sensor 10 is connected, is examined. If the channel 5a is active (step 111/T), control returns to the checkout phase; otherwise (step 111/F) control passes to the read phase;
- a read phase (step 112), during which the values set in the memory registers 33 and 34 are read;
- an evaluation phase (step 113), during which the condition of slip of one wheel of the machine with respect to the other one on the same axle is checked by comparing the values previously measured during the measurement phase with the preset values read during the read phase; if the evaluation is positive (step 114/T), control passes to the locking phase; otherwise (step 114/F) control returns to the checkout phase;
- a locking phase, during which the set energization time of the electric valves 4 is initially read (step 115). Then (step 116) the output channel 6 is activated; said channel energizes the electric valves 4 by means of the amplifier 13. Then (step 117) time calculation is activated and verified in step 118. Until the set time has elapsed (step 118/T), the status of the channel 5c connected to the manual control 12 is evaluated (step 119). If the channel 5c is active (step 119/T), control passes to the manual locking phase; otherwise (step 119/F) control returns to step 118. When the set time has elapsed (step 118/T), control returns to the checkout phase;
- a manual locking phase, during which the output channel 6 is activated (step 120); said channel, by means of the amplifier 13, energizes the electric valves 4. The status of the channel 5c connected to the manual control 12 is evaluated in step 121. While the channel 5c is active (step 121/T), its evaluation is performed cyclically; when the channel is instead inactive (step 121/F), control returns to the checkout phase.

The values measured during the measurement phase are speeds of axle shafts which connect the differential to the wheels, and the sensors are phonic wheels (not illustrated) which are keyed on said axle shafts (not illustrated). Said phonic wheels have peripheral sets of 55 teeth.

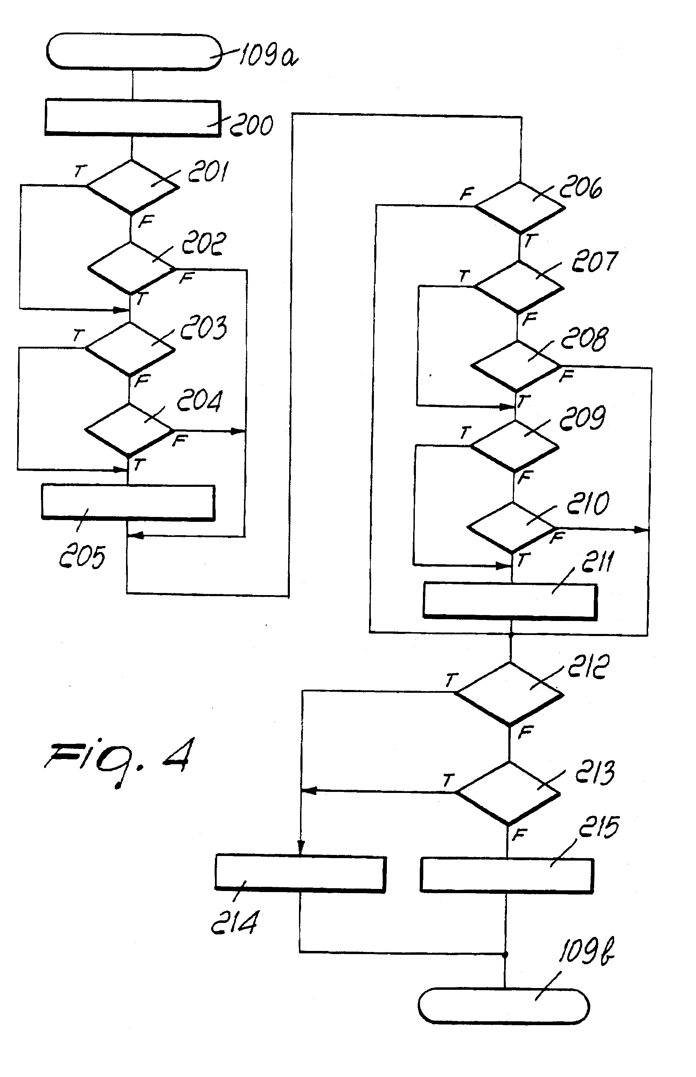

With reference to figure 4, the verification phase comprises the following sub-phases:

- an initialization sub-phase, during which the verification parameters or flags, termed FV1V2OK and FV3V4OK, are set equal to zero (step 200). Then a check is performed to determine whether the measured values related to a first axle are greater than a set minimum value and smaller than a set maximum value. In detail, indicating the measured speeds with $V_1$ and $V_2$ and the set minimum and maximum values with $V_{min}$ and $V_{max}$, $V_1$ is first of all compared with $V_{min}$ (step 201). If $V_1$ is greater than $V_{min}$ (step 201/T), control passes to step 203, otherwise (step 201/F) control passes to step 202. In step 202, a check is performed to determine whether $V_2$ is greater than $V_{min}$. If $V_2$ is greater than $V_{min}$ (step 202/T), control passes to step 203; otherwise (step 202/F) control passes to the checkout sub-phase. $V_1$ and $V_{max}$ are compared in step 203. If $V_1$ is smaller than $V_{max}$ (step 203/T), control passes to step 205; otherwise (step 203/F) control passes to step 204. $V_2$ and $V_{max}$ are compared in

3

step 204. If $V_2$ is smaller than $V_{max}$ (step 204/T), control passes to step 205; otherwise (step 204/F) control passes to the checkout sub-phase. In step 205, the verification flag FV1V2OK is set equal to one;

- a checkout sub-phase (step 206), during which the number of axles involved in the measurements is determined. In the case of a single axle (step 206/F), control passes to the analysis sub-phase (step 212); otherwise (step 206/T) control passes to the verification sub-phase;

- a verification sub-phase, during which a check is performed to determine whether the values related to a second axle are greater than $V_{min}$ and smaller than $V_{max}$. In detail, indicating with $V_3$ and $V_4$ the measured speeds, first of all (step 207) $V_3$ is compared with $V_{min}$. If $V_3$ is greater than $V_{min}$ (step 207/T), control passes to step 209; otherwise (step 207/F) control passes to step 208. In step 208, a check is performed to determine whether $V_4$ is greater than $V_{min}$. If $V_4$ is greater than $V_{min}$ (step 208/T), control passes to step 209; otherwise (step 208/F) control passes to the analysis sub-phase. $V_3$ and $V_{max}$ are compared in step 209. If $V_3$ is smaller than $V_{max}$ (step 209/T), control passes to step 211; otherwise (step 209/F) control passes to step 210. $V_4$ and $V_{max}$ are compared in step 210. If $V_4$ is smaller than $V_{max}$ (step 210/T), control passes to step 211; otherwise (step 210/F) control passes to the analysis sub-phase. In step 211, the verification flag FV3V4OK is set equal to one;

- an analysis sub-phase, during which the FV1V2OK and FV3V4OK parameters or flags generated by the initialization and verification sub-phases are evaluated in order to pass the verification parameter to step 110. In detail, the flag FV1V2OK is evaluated in step 212. If it is zero (step 212/F), control passes to step 213; otherwise (step 212/T) control passes to step 214. The flag FV3V4OK is evaluated in step 213. If its value is zero (step 213/F), control passes to step 215; otherwise (step 213/T) control passes to step 214. A parameter indicated by FVOK is set to zero in step 215 so as to indicate that all the speeds are outside the set limits. In step 214, the parameter FVOK is set equal to one so as to indicate that at least one of the pairs $V_1$, $V_2$ and $V_3$, $V_4$ complies with the set limits. The parameter FVOK is then evaluated in step 110.

As can be deduced from the description of the verification phase and from what has been described above for the main flowchart, at least one pair of measured speeds must be within the preset limits in order to continue the process. If a single axle is enabled for it, said verification examines the parameters of that single axle.

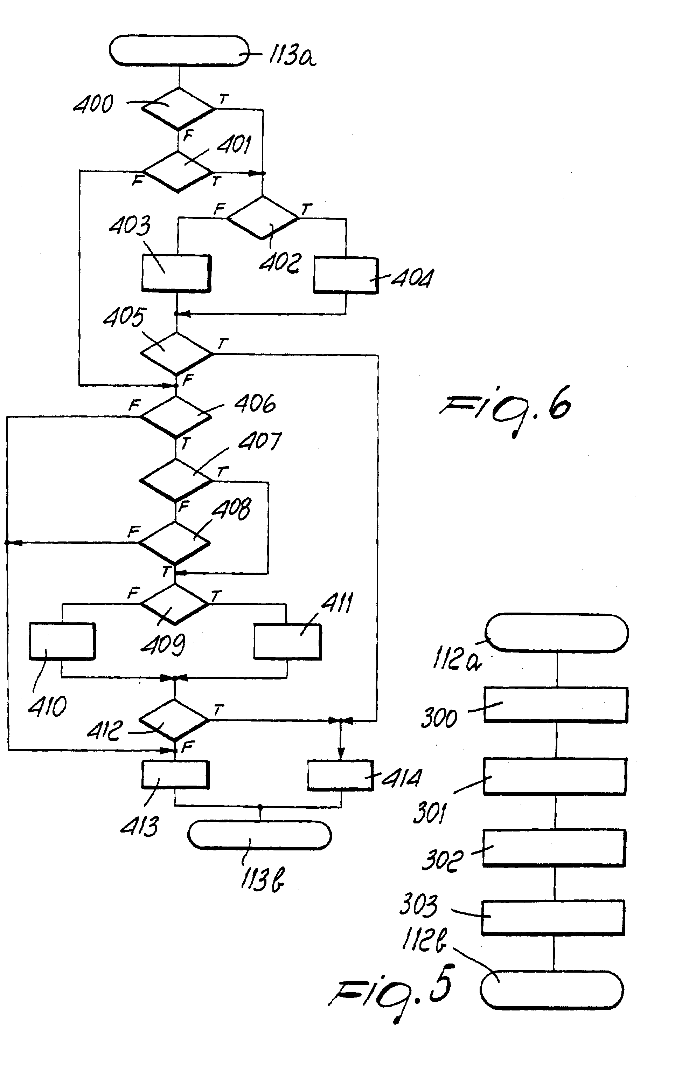

With reference to figure 5, the read phase (step 112) comprises the following sub-phases;

- a read sub-phase (step 300), during which the values preset on the switchable memory means 33 and 34 are read;

- a conversion sub-phase (step 301), during which the values read in step 300 are decoded by means of decoding tables, as more clearly explained hereinafter;

- a composition sub-phase (step 302), during which a slip percentage value read by the switchable read means 33 and 34 is composed, or rather added, to a percentage which varies according to the type of axle, as more clearly described hereinafter, chosen with the steering selector 11 connected to the channel 5b. The mentioned data are detected in the read sub-phase (step 300);

- a memorization sub-phase (step 303), during which the datum calculated in step 302, which is termed "calculated percentage" or P%, is stored in a volatile memory register.

The values read in the read phase are preset in the switchable memory means 33 and 34 by means of preset combinations. The decoding tables convert the configurations assumed by the switches 21 to 32 into values to be used in subsequent processing.

Tables 1 to 4 list said decoding tables. The ON and OFF values indicated below the identification numeral of each switch correspond to the positions 35 and 36 of figure 2.

| 21 | 22 | 23 | 24 | 25 | Allowable percentage |
|---|---|---|---|---|---|
| ON | ON | ON | ON | ON | 1% |
| OFF | ON | ON | ON | ON | 2% |
| ON | OFF | ON | ON | ON | 3% |
| OFF | OFF | ON | ON | ON | 4% |
| ON | ON | OFF | ON | ON | 5% |
| OFF | ON | OFF | ON | ON | 6% |
| ON | OFF | OFF | ON | ON | 7% |
| OFF | OFF | OFF | ON | ON | 8% |
| ON | ON | ON | OFF | ON | 9% |
| OFF | ON | ON | OFF | ON | 10% |
| ON | OFF | ON | OFF | ON | 11% |
| OFF | OFF | ON | OFF | ON | 12% |
| ON | ON | OFF | OFF | ON | 13% |
| OFF | ON | OFF | OFF | ON | 14% |
| ON | OFF | OFF | OFF | ON | 15% |
| OFF | OFF | OFF | OFF | ON | 16% |
| ON | ON | ON | ON | OFF | 17% |
| OFF | ON | ON | ON | OFF | 18% |
| ON | OFF | ON | ON | OFF | 19% |
| OFF | OFF | ON | ON | OFF | 20% |
| ON | ON | OFF | ON | OFF | 21% |
| OFF | ON | OFF | ON | OFF | 22% |
| ON | OFF | OFF | ON | OFF | 23% |
| OFF | OFF | OFF | ON | OFF | 24% |
| ON | ON | ON | OFF | OFF | 26% |
| OFF | ON | ON | OFF | OFF | 28% |
| ON | OFF | ON | OFF | OFF | 30% |
| OFF | OFF | ON | OFF | OFF | 32% |
| ON | ON | OFF | OFF | OFF | 34% |
| OFF | ON | OFF | OFF | OFF | 36% |
| ON | OFF | OFF | OFF | OFF | 38% |
| OFF | OFF | OFF | OFF | OFF | 40% |

TABLE    1

| 26 | 27 | 28 | Duration of actuation |
|----|----|----|----|
| ON | ON | ON | 1 sec. |
| OFF | ON | ON | 3 " |
| ON | OFF | ON | 5 " |
| OFF | OFF | ON | 7 " |
| ON | ON | OFF | 9 " |
| OFF | ON | OFF | 11 " |
| ON | OFF | OFF | 13 " |
| OFF | OFF | OFF | 15 " |

TABLE     2

| 29 | 30 | 31 | Upper speed limit |
|----|----|----|----|
| ON | ON | ON | 100 |
| OFF | ON | ON | 150 |
| ON | OFF | ON | 200 |
| OFF | OFF | ON | 250 |
| ON | ON | OFF | 300 |
| OFF | ON | OFF | 350 |
| ON | OFF | OFF | 400 |
| OFF | OFF | OFF | 400 |

TABLE     3

| 32 | number of inputs |
|----|----|
| ON | 2 |
| OFF | 4 |

TABLE     4

Table 1 provides the differential percentage allowable between two axle shafts, to which one of the following percentages, according to the value of the steering selector 12, must be added:

Single axle 12%

Dual axle 20%

Pilgrim pitch 5%

which are stored in non-volatile memories in the device.

6

Table 2 provides the conversion factors for the duration of the automatic locking actuation in seconds, whereas table 3 provides the maximum comparison speed or $V_{max}$. The minimum speed or $V_{min}$ is instead equal to 20 rpm, and is stored permanently in a non-volatile memory of the device.

Table 4 instead provides the selection of the measurement channels to be used. The selection of the different types of steering occurs by means of a mechanical selector located on the control panel of the machine (not illustrated) and is performed by the operator.

The evaluation phase (step 113) comprises, as illustrated in figure 6, the following sub-phases;

- an evaluation sub-phase, in which the values $V_1$ and $V_2$ are examined in order to evaluate their percentage variation together with the calculated percentage or P%. In detail, $V_1$ and $V_{min}$ are compared in step 400. If $V_1$ is greater than $V_{min}$ (step 400/T), control passes to step 402; otherwise (step 400/F) control passes to step 401. $V_2$ and $V_{min}$ are compared in step 401. If $V_2$ is greater than $V_{min}$ (step 401/T), control passes to step 402; otherwise (step 401/F) control passes to the checkout sub-phase (step 406). The values $V_1$ and $V_2$ are compared in step 402. If $V_1$ is greater than $V_2$ (step 402/T), control passes to step 404; otherwise (step 402/F) control passes to step 403. Two parameters $P_1$ and $P_2$ are calculated in step 403 in the following manner:

$$P_1 = (V_2 - V_1) * 100; P_2 = V_2 * P\%$$

The parameters $P_1$ and $P_2$ are calculated in step 404 in the following manner:

$$P_1 = (V_1 - V_2) * 100; P_2 = V_1 * P\%$$

The values $P_1$ and $P_2$ are compared in step 405. If $P_1$ is greater than, or equal to, $P_2$ (step 405/T), control passes to the verification sub-phase (step 414); otherwise (step 405/F) control passes to the checkout sub-phase;

- a checkout sub-phase (step 406), during which the axles of the machine involved in the measurement are evaluated. In the case of a single axle (step 406/F), control passes to the verification sub-phase (step 413); otherwise (step 406/T) control passes to the verification sub-phase (step 407);

- a verification sub-phase, during which the operations performed in the evaluation sub-phase are repeated for the second axle. In detail, $V_3$ and $V_{min}$ are compared in step 407. If $V_3$ is greater than $V_{min}$ (step 407/T), control passes to step 409; otherwise (step 407/F) control passes to step 408. $V_4$ and $V_{min}$ are compared in step 408. If $V_4$ is greater than $V_{min}$ (step 408/T), control passes to step 409; otherwise (step 408/F) control passes to step 413. $V_3$ and $V_4$ are compared in step 409. If $V_3$ is greater than $V_4$ (step 409/T), control passes to step 411; otherwise (step 409/F) control passes to step 410. Two parameters $P_3$ and $P_4$ are calculated in step 410 in the following manner:

$$P_3 = (V_4 - V_3) * 100; P_4 = V_4 * P\%$$

The parameters $P_3$ and $P_4$ are calculated in step 411 in the following manner:

$$P_3 = (V_3 - V_4) * 100; P_4 = V_4 * P\%$$

$P_3$ and $P_4$ are compared in step 412. If $P_3$ is greater than, or equal to, $P_4$ (step 412/T), control passes to step 414; otherwise (step 412/F) control passes to step 413. In step 413, a parameter or flag SLITT is set equal to zero. In step 414, the flag SLITT is set equal to one. The flag SLITT is the evaluation element of step 114.

The parameters $P_1$, $P_2$, $P_3$ and $P_4$, which are necessary to compare the relative percentage variation in speed between the axle shafts of a single axle with the percentage P% calculated in the read phase, are calculated in steps 403, 404, 410 and 411. The operations indicated for this comparison in the respective steps are obtained starting from the following ones: if $V_1$ is greater than $V_2$, then the relative percentage variation $P_S$ is given by:

$$P_S = [(V_1 - V_2) / V_1] * 100$$

The condition of no slip must be $P\% >= P_S$.
Therefore:

$$P\% >= [(V_1 - V_2) / V_1] * 100$$

from which

$$V_1 * P\% > = (V_1 - V_2) * 100$$

The previously indicated formulas are obtained with the adaptations related to the opposite case and to $V_3$ and $V_4$. The left and right terms of the last formula are the previously mentioned terms $P_1$, $P_2$, $P_3$ and $P_4$.

The described process constitutes the program-based driver means of the microprocessor; said means energize the electric valves 4 by means of the power amplifier 13 and by means of the output channel 6. Each electric valve 4 must have the following technical characteristics: power supply voltage 12 Volts and energization current comprised between 3.1 and 4.1 amperes.

The embodiment of figure 2 illustrates a possible execution of a device according to the invention. Said execution comprises a supporting board 40 on which the microprocessor 1, the configurable switch banks 33 and 34 and a connector 41 for connection to the machine (not illustrated) on which the device is installed are mounted. Various other active and passive components are mounted on the board 40 so as to complete the electric circuit and the logic circuitry.

From the above description it is evident that the intended aim and objects have been achieved, providing an activation of the locking of differentials which is based on quantitative elements and not only on qualitative ones.

In practice, the materials employed, as well as the dimensions, may be any according to the requirements. The invention thus conceived is susceptible to numerous modifications and variations, all of which are within the scope of the inventive concept. Thus, for example, the electronic componentry can vary according to the different industrializations of the practical embodiments of the device according to the invention. All the details may furthermore be replaced with other technically equivalent ones.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for the automatic control of the locking of differentials, particularly for industrial machines, earth-movers and the like, characterized in that it comprises processing means for evaluating a plurality of signals arriving from a plurality of sensors and of selectors which can be electrically connected to said processing means, said processing means being provided with switchable memory means and with program-based driver means for actuating differential locking means.

2. Device according to claim 1, characterized in that said processing means comprise a microprocessor which is provided with a plurality of input terminals and with at least one output terminal.

3. Device according to claim 2, characterized in that it comprises signal forming means which are interposed between said plurality of sensors and said plurality of input terminals.

4. Device according to claim 3, characterized in that said signal forming means comprise signal amplifiers.

5. Device according to claim 2, characterized in that it comprises signal adapter means for connection between said output terminal and said differential locking means.

6. Device according to claim 5, characterized in that said signal adapter means comprise a power amplifier.

7. Device according to claim 1, characterized in that said switchable memory means comprise a plurality of two-position switches for configuring said program-based driver means.

8. Process for the automatic control of the locking of differentials, particularly for industrial machines, earth-movers and the like, characterized in that it comprises the following phases:
   - a checkout phase, during which the number of measurement channels to be used and their use are evaluated;

- a measurement phase, during which the pulses in input in each individual measurement channel in a preset time are measured, simultaneously evaluating the value of another input channel connected to a manual control for locking differentials; if said manual control is active, control is passed to the manual locking phase;
- a verification phase, during which the values measured on each input channel are compared with preset maximum and minimum values; if this verification is positive, control is passed to the testing phase; otherwise control is returned to the checkout phase;
- a testing phase, during which the value of a further input channel connected to a steering sensor is evaluated; if the channel is active, control returns to the checkout phase; otherwise control is passed to the read phase;
- a read phase, during which the values set in memory registers are read;
- an evaluation phase, during which the condition of slip of one wheel of the machine with respect to another wheel is checked by comparing the measured values with the values read during the read phase; if the evaluation is positive, control is passed to the locking phase; otherwise control returns to the checkout phase;
- a locking phase, during which an output channel for the actuation of at least one differential locking electric valve is activated for a preset time and read; the value of the manual control channel is furthermore evaluated; if the preset time has ended and the channel of the manual control is not active, control returns to the checkout phase; otherwise control passes to the manual locking phase;
- a manual locking phase, during which an output channel for the actuation of at least one differential locking electric valve is activated until the signal of the manual control channel remains active; when said signal is no longer active, control returns to the checkout phase.

9. Process according to claim 8, characterized in that said verification phase comprises the following sub-phases:
- an initialization sub-phase, during which the verification parameters are reset and the measured values related to a single axle of the machine are mutually compared;
- a checkout sub-phase, during which the number of axles involved in the measurements is checked; if the machine has only one controlled axle, control passes to the analysis sub-phase; otherwise control passes to the verification sub-phase;
- a verification sub-phase, during which the measured data related to the other axle of the machine are compared;
- an analysis sub-phase, during which the parameters generated by the preceding initialization and verification sub-phases are compared; if at least one of them is positive, said verification step has a positive outcome; otherwise it is negative.

10. Process according to claim 8, characterized in that said read phase comprises the following sub-phases:
- a read sub-phase, during which the values preset on switchable memory means are read;
- a conversion sub-phase, during which the values read in the read sub-phase are decoded by means of a decoding table;
- a composition sub-phase, during which a slip percentage value is composed with a percentage which varies according to the type of axle being used; said data being obtained from the preceding read and decoding sub-phases;
- a memorization sub-phase, during which the value determined in the preceding composition sub-phase is recorded in a memory register.

11. Process according to claim 8, characterized in that said evaluation phase comprises the following sub-phases:
- an evaluation sub-phase, during which the measured values related to an axle in said measurement phase are compared with a preset minimum value; if none of these values exceeds said minimum value, control is passed to the checkout sub-phase; otherwise the percentage variation of said values on the axle is compared with the value stored in said read phase;
- a checkout sub-phase, during which the axles of the machine involved in the checkout are evaluated; in the case of a single axle, control passes to the locking phase or to the checkout phase according to the value of the checkout performed during said evaluation sub-phase: in the

9

case of two axles, control passes to the verification sub-phase for the other axle of the machine;

- a verification sub-phase, during which the measured values related to the other axle in said measurement phase are compared with a preset minimum value; if none of said measured values exceeds the minimum, exit is performed along the paths described in the checkout sub-phase; otherwise the percentage variation of said measured values is compared with said value stored in said read phase; if said comparison is positive, the locking phase is started; otherwise control returns to the checkout phase.

12. Device according to one or more of the preceding claims, characterized in that said program-based driver means comprise the phases of the process.

13. Device according to one or more of the preceding claims, characterized in that said differential locking means comprise at least one electric valve.

EP 0 467 351 A2

Fig.1

Fig.2

11

Fig. 3

Fig. 4

Fig.6

Fig.5